# FASCICULE DE BREVET EUROPEEN

(11) **EP 4 433 329 B1**
(45) Date de publication et mention de la délivrance du brevet: **14.01.2026**
(21) Numéro de dépôt: 22818751.4
(22) Date de dépôt: 18.11.2022
(51) Int. Cl.: B60R 5/04, E05D 7/10

(54) **SYSTÈME DE MONTAGE EN ROTATION D'UNE TABLETTE DE RECOUVREMENT D'UN COMPARTIMENT À BAGAGES DE VÉHICULE AUTOMOBILE**
SYSTEM ZUR DREHBAREN MONTAGE EINER ABDECKPLATTE FÜR EINEN KRAFTFAHRZEUGKOFFERRAUM
SYSTEM FOR ROTATABLY MOUNTING A COVERING PANEL FOR A MOTOR VEHICLE TRUNK

(30) Priorité: 19.11.2021 FR 2112279
(43) Date de publication de la demande: 25.09.2024
(73) Titulaire: TREVES PRODUCTS, SERVICES & INNOVATION, 75008 Paris (FR)
(72) Inventeur: BRILLON, Eric, 75008 PARIS (FR); BONFILS, Xavier, 75008 PARIS (FR)
(74) Mandataire: Sayettat, Julien Christian
(86) Numéro de dépôt international: PCT/EP2022/082504
(87) Numéro de publication internationale: WO 2023/089143

(56) Documents cités:
- JP-A- H1 191 444
- JP-B2- 2 865 245
- JP-U- S6 450 145
- JP-U- S62 194 150

## Description

L'invention concerne un système de montage en rotation d'une tablette de recouvrement d'un compartiment à bagages de véhicule automobile sur une garniture dudit compartiment, et un ensemble comprenant une garniture et une tablette montée dessus par un tel système.

On connait un système de montage en rotation d'une tablette de recouvrement d'un compartiment à bagages de véhicule automobile sur une garniture dudit compartiment, ledit système comprenant deux dispositifs d'emboitement de ladite tablette en rotation, chacun desdits dispositifs comprenant :
- un doigt transversal solidaire de ladite tablette - respectivement ou de ladite garniture,
- un récepteur en emboitement dudit doigt solidaire de ladite garniture - respectivement ou de ladite tablette - ledit récepteur présentant un logement de réception dudit doigt en contact ajusté, ledit logement étant pourvu d'une première ouverture débouchant horizontalement de sorte que ladite tablette se monte par translation horizontale.

Un tel système permet un relevage de la tablette à partir de sa position horizontale de recouvrement vers une position relevée d'accès aux bagages.

Il peut être souhaité d'équiper la tablette d'au moins un transducteur électrodynamique afin d'assurer la transmission d'un signal électrique, par exemple en provenance d'un appareil de radio ou d'un lecteur de disque.

Pour ce faire, on transforme un signal électrique en un signal acoustique en utilisant comme surface de rayonnement la paroi de la tablette.
Or, un système tel que décrit précédemment ne permet pas à la tablette de vibrer selon une direction verticale préférentielle - c'est à dire perpendiculaire au plan horizontal selon lequel elle s'inscrit généralement - qui correspond à un mode de suspension dans lequel la tablette ne subit pas de déformation (mode de corps rigide). Le document JP 2 865245 B2 divulgue un système de montage en rotation d'une tablette de recouvrement d'un compartiment à bagages de véhicule automobile sur une garniture dudit compartiment conforme au préambule de la revendication 1.

L'invention a pour but de proposer un système amélioré permettant d'assurer une telle mise en vibration, et ceci tout en préservant l'ergonomie de montage de la tablette et son découplage permettant de limiter la transmission des vibrations dans le reste du véhicule, et notamment dans les dossiers de sièges et garnitures du compartiment à bagages.

A cet effet, et selon un premier aspect, l'invention propose un système de montage en rotation d'une tablette de recouvrement d'un compartiment à bagages de véhicule automobile sur une garniture dudit compartiment, présentant les caractéristiques de la revendication 1.

Dans cette description, les termes de positionnement dans l'espace (haut, bas, supérieur, inférieur, longitudinal, transversal, latéral, avant, arrière, vertical, horizontal, ...) sont pris en référence au système en place dans le véhicule. Avec l'agencement proposé :
- la présence du moyen de découplage entre le récepteur et les parois supérieure et inférieure permet à la tablette de vibrer verticalement (ondes de flexion),
- la présence de la lame d'air permet d'une part de ne pas entraver cette vibration verticale et d'autre part de ne pas nuire à l'ergonomie de montage de la tablette ; en effet, sous l'effet de la poussée exercée sur la tablette pour réaliser son emboitement, le débattement du récepteur par rapport à la paroi médiane ne peut excéder la cote correspondant à l'épaisseur de la lame d'air ; cette épaisseur - étant choisie par exemple inférieure à 1,5 mm - correspond à la surcourse maximale que peut effectuer la tablette par rapport à son positionnement nominal lors de son montage ; de par le choix d'une épaisseur suffisamment faible, l'utilisateur emboitant la tablette n'est pas confronté à une impression de « pousser dans le vide » ; en outre, la présence de la lame d'air permet d'éviter la transmission des vibrations dans un plan horizontal.

Selon un deuxième aspect, l'invention propose un ensemble comprenant une garniture et une tablette montée dessus par un tel système.

D'autres particularités et avantages de l'invention apparaîtront dans la description qui suit, faite en référence aux figures jointes, dans lesquelles :
[Fig.1a] et
[Fig.1b] sont des vues schématiques en perspectives partielles d'un ensemble selon respectivement une réalisation de l'invention, la tablette étant démontée de la garniture,
[Fig.2] est une vue schématique de détail en perspective d'un dispositif d'emboitement selon la réalisation de la figure 1a,
[Fig.3a] et
[Fig.3b] sont des vues schématiques en coupe longitudinale d'un dispositif selon respectivement un mode de réalisation de l'invention, la figure 3a correspondant à la figure 2,
[Fig.4] est une représentation de la transmissibilité des vibrations (c'est à dire le ratio entre les vibrations en amont - à savoir au niveau de la tablette - et en aval - à savoir au niveau de la garniture) en fonction de la fréquence (en Hertz) d'un dispositif selon la figure 3b (courbe 2) comparée à celle d'un dispositif analogue dépourvu de lame d'air (courbe 1).

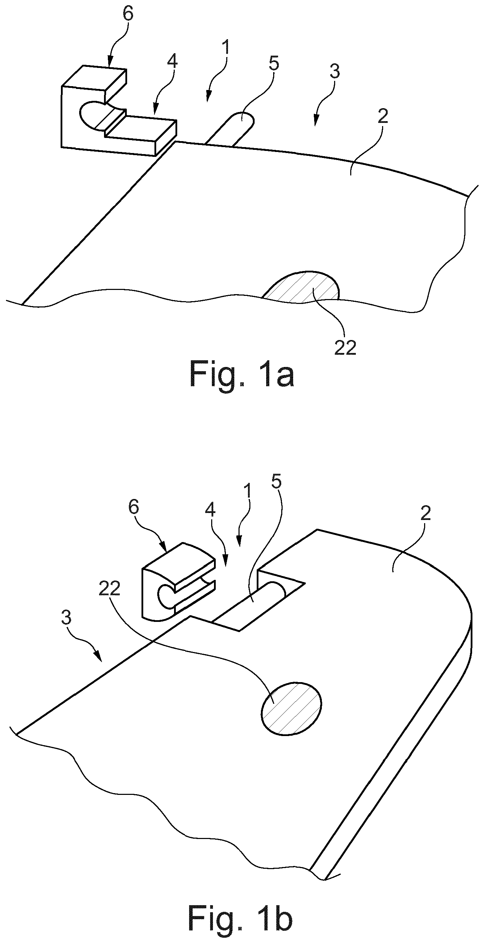

En référence aux figures, on décrit un système 1 de montage en rotation d'une tablette 2 de recouvrement d'un compartiment à bagages de véhicule automobile sur une garniture 3 dudit compartiment, ledit système comprenant deux dispositifs d'emboitement 4 de ladite tablette en rotation, chacun desdits dispositifs comprenant :
- un doigt 5 transversal solidaire de ladite tablette, selon les représentations des figures 1a et 1b - respectivement ou de ladite garniture, de façon non représentée -,
- un récepteur 6 en emboitement dudit doigt solidaire de ladite garniture, selon les représentations des figures 1a et 1b - respectivement ou de ladite tablette, de façon non représentée - ledit récepteur présentant un logement 7 de réception dudit doigt en contact ajusté, ledit logement étant pourvu d'une première ouverture 8 débouchant horizontalement de sorte que ladite tablette se monte par translation horizontale,
le système présentant en outre les caractéristiques suivantes :
- il comprend en outre une cavité 9 prévue dans ladite garniture, selon les représentations des figures 1a et 1b - respectivement ou ladite tablette, de façon non représentée -, ledit récepteur étant monté dans ladite cavité, ladite première ouverture débouchant sur une deuxième ouverture 10 prévue dans ladite cavité, ladite cavité présentant une paroi supérieure 11, une paroi inférieure 12 et une paroi médiane 13 les reliant entre elles,
- il comprend en outre un moyen de découplage 14 en matériau élastiquement compressible s'étendant entre ledit récepteur et lesdites parois supérieure et inférieure,
- une lame d'air 15 est prévue entre ledit récepteur et ladite paroi médiane.

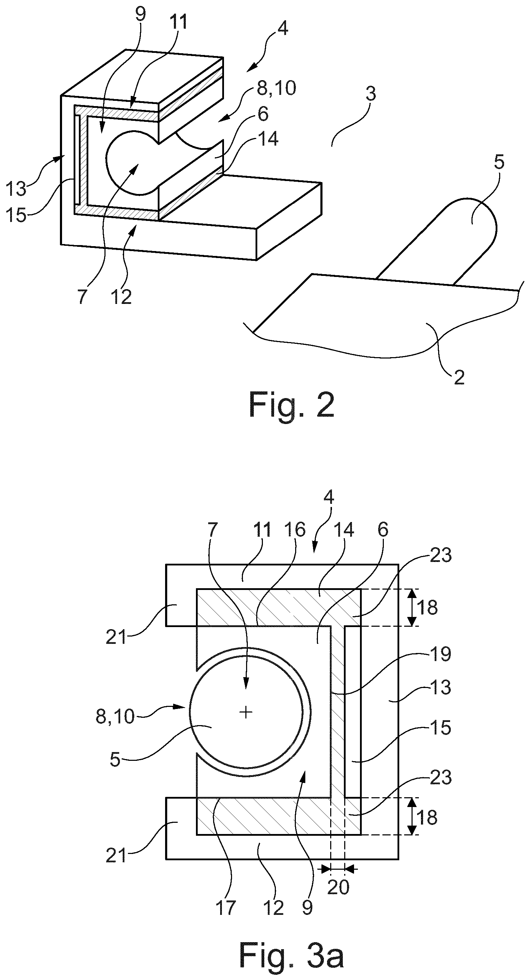

Selon le mode de réalisation représenté en figure 3a, le moyen de découplage 14 s'étend en outre entre le récepteur 6 et la paroi médiane 13, la lame d'air 15 étant située entre ledit moyen et ladite paroi.

L'extension du moyen de découplage 14 en regard de la paroi médiane 13 permet de garantir l'absence de contact entre le récepteur 6 et la paroi médiane 13 lors du montage de la tablette 2, et d'éviter ainsi un bruit inopportun.

Selon une réalisation, le moyen de découplage 14 est à base de matériau élastomère.

Le matériau élastomère est notamment de type thermoplastique élastomère (TPE), notamment les matériaux de type polyoléfine (TPO), polystyrène (TPS), polyuréthanne (TPU) ou encore thermoplastique vulcanisé (TPV), le choix du matériau étant fait selon les exigences requises.

Selon une réalisation, le moyen de découplage 14 présente les caractéristiques suivantes :
- sa dureté, mesurée selon la norme ISO 868 en vigueur à la date de dépôt de la demande, est comprise entre 25 et 90 shore A,
- et/ou sa déformation rémanente en compression (DRC), mesurée selon la norme ISO 815 en vigueur à la date de dépôt de la demande, est inférieure à 40%, la mesure étant réalisée à température de 23°C, à l'issue d'une sollicitation en déformation de 24h.

Selon une réalisation, la lame d'air 15 présente une épaisseur minimum de 0,5 mm.

Selon une réalisation, la lame d'air 15 présente une épaisseur maximum de 2 mm.

Selon les réalisations représentées :
- les parois supérieure 11 et inférieure 12 s'inscrivent dans des plans horizontaux, le récepteur 6 présentant des faces externes supérieure 16 et inférieure 17 parallèles auxdites parois supérieure et inférieure, le moyen de découplage 14 présentant en haut et en bas une même première épaisseur 18,
- la paroi médiane 13 s'inscrit dans un plan vertical, le récepteur présentant en outre une face externe médiane 19 parallèle à ladite paroi médiane.

Selon une réalisation, la première épaisseur 18 est comprise entre 2 et 5 mm, le choix d'une épaisseur suffisante étant nécessaire pour permettre une vibration verticale adéquate de la tablette 2.

Selon le mode de réalisation représenté en figure 3a, le moyen de découplage 14 présente en regard de la paroi médiane 13 une deuxième épaisseur 20 inférieure à la première épaisseur 18.

Selon une réalisation, la deuxième épaisseur 20 est comprise entre 0,5 et 2 mm, de manière à minimiser le débattement du récepteur 6 lors du montage de la tablette 2, et à optimiser ainsi l'ergonomie de montage.

Selon les réalisations représentées, le logement 7 présente une section en forme générale de C dont l'ouverture - correspondant à la première ouverture 8 - est agrandissable élastiquement - le récepteur 6 étant notamment en matériau plastique moulé - de manière à permettre une insertion en force du doigt 5 et son maintien dans ledit logement une fois ladite ouverture revenue à son état non déformé.

Selon les réalisations représentées, la deuxième ouverture 10 est délimitée en haut et en bas par deux retours 21 issus respectivement des parois supérieure 11 et inférieure 12, lesdits retours formant butées d'anti-extraction du moyen de découplage 14 de la cavité 9.

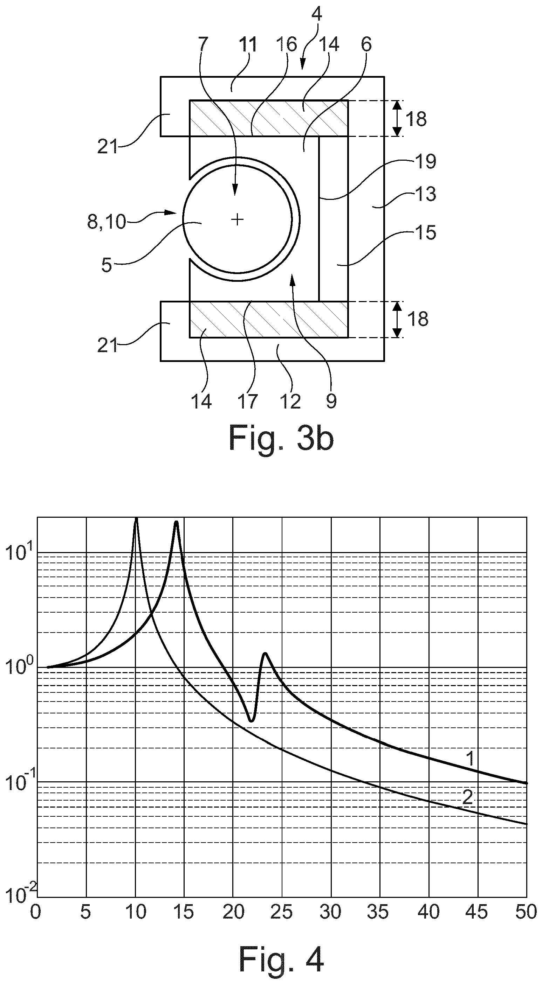

Selon la réalisation de la figure 3b, le récepteur 6 est en retrait du moyen de découplage 14 en regard de la paroi médiane 13, ledit moyen prenant appui contre ladite paroi et ledit récepteur en étant écarté de manière à définir la lame d'air 15.

Selon la réalisation de la figure 3a, le moyen de découplage 14 présente deux saillies 23 prenant appui sur le haut et le bas de la paroi médiane 13, la lame d'air 15 s'étendant entre lesdites saillies.

On décrit enfin, en référence aux figures 1a et 1b, un ensemble comprenant une garniture 3 et une tablette 2 montée dessus par un tel système, ladite tablette étant pourvue d'un transducteur 22 électrodynamique.

Dans la réalisation de la figure 1a, les doigts 5 sont solidaires des coins avant de la tablette 2 et les récepteurs 6 sont solidaires des parties latérales de la garniture 3 du compartiment à bagages.

Dans la réalisation de la figure 1b, les doigts 5 sont solidaires du bord arrière de la tablette 2 et les récepteurs 6 sont solidaires de la partie arrière de la garniture 3 du compartiment à bagages, ladite partie étant disposée sur le hayon du véhicule.

Selon des réalisations non représentées, il peut être prévu, dans les réalisations des figures 1a et 1b, d'interchanger le positionnement des doigts 5 et des récepteurs 6, à savoir de positionner lesdits doigts sur la garniture 3 et lesdits récepteurs sur la tablette 2.

On commente à présent les courbes de la figure 4.

On observe que le découplage est amélioré par la présence de la lame d'air 15, la première fréquence de résonance étant décalée vers les basses fréquences et la transmission des vibrations étant réduite plus tôt dans les hautes fréquences (avec un facteur supérieur à 2 à 50 Hz).

On notera également que le fait de prévoir, selon la réalisation de la figure 3a, que le moyen de découplage 14 s'étende en outre entre le récepteur 6 et la paroi médiane 13 conduit à un comportement acoustique analogue à celui de la réalisation de la figure 3b.

## Revendications

1. Système (1) de montage en rotation d'une tablette (2) de recouvrement d'un compartiment à bagages de véhicule automobile sur une garniture (3) dudit compartiment, ledit système comprenant deux dispositifs d'emboitement (4) de ladite tablette en rotation, chacun desdits dispositifs comprenant :
• un doigt (5) transversal destiné à être solidarisé à ladite tablette - respectivement à ladite garniture -,
• un récepteur (6) en emboitement dudit doigt destiné à être solidarisé à ladite garniture - respectivement à ladite tablette - ledit récepteur présentant un logement (7) de réception dudit doigt en contact ajusté, ledit logement étant pourvu d'une première ouverture (8) débouchant horizontalement de sorte que ladite tablette se monte par translation horizontale,
le système présentant en outre les caractéristiques suivantes :
• il comprend en outre une cavité (9) prévue dans ladite garniture - respectivement ou ladite tablette -, ledit récepteur étant monté dans ladite cavité, ladite première ouverture débouchant sur une deuxième ouverture (10) prévue dans ladite cavité, ladite cavité présentant une paroi supérieure (11), une paroi inférieure (12) et une paroi médiane (13) les reliant entre elles, le système étant **caractérisé en ce qu'**il comprend en outre un moyen de découplage (14) en matériau élastiquement compressible s'étendant entre ledit récepteur et lesdites parois supérieure et inférieure, et **en ce qu'**une lame d'air (15) est prévue entre ledit récepteur et ladite paroi médiane.

2. Système selon la revendication 1, **caractérisé en ce que** le moyen de découplage (14) s'étend en outre entre le récepteur (6) et la paroi médiane (13), la lame d'air (15) étant située entre ledit moyen et ladite paroi.

3. Système selon l'une des revendications précédentes, **caractérisé en ce que** le moyen de découplage (14) est à base de matériau élastomère.

4. Système selon l'une quelconque des revendications précédentes, **caractérisé en ce que** la lame d'air (15) présente une épaisseur minimum de 0,5 mm.

5. Système selon l'une quelconque des revendications précédentes, **caractérisé en ce que** :
• les parois supérieure (11) et inférieure (12) s'inscrivent dans des plans horizontaux, le récepteur (6) présentant des faces externes supérieure (16) et inférieure (17) parallèles auxdites parois supérieure et inférieure, le moyen de découplage (14) présentant en haut et en bas une même première épaisseur (18),
• la paroi médiane (13) s'inscrit dans un plan vertical, le récepteur présentant en en outre une face externe médiane (19) parallèle à ladite paroi médiane.

6. Système selon la revendication 5, quand elle se rattache à la revendication 2, **caractérisé en ce que** le moyen de découplage (14) présente en regard de la paroi médiane (13) une deuxième épaisseur (20) inférieure à la première épaisseur (18).

7. Système selon l'une quelconque des revendications précédentes, **caractérisé en ce que** le logement (7) présente une section en forme générale de C dont l'ouverture est agrandissable élastiquement de manière à permettre une insertion en force du doigt (5) et son maintien dans ledit logement une fois ladite ouverture revenue à son état non déformé.

8. Système selon l'une quelconque des revendications précédentes, **caractérisé en ce que** la deuxième ouverture (10) est délimitée en haut et en bas par deux retours (21) issus respectivement des parois supérieure (11) et inférieure (12), lesdits retours formant butées d'anti-extraction du moyen de découplage (14) de la cavité (9).

9. Ensemble comprenant une garniture (3) et une tablette (2) montée dessus par un système selon l'une quelconque des revendications précédentes, ladite tablette étant pourvue d'un transducteur (22) électrodynamique.

## Patentansprüche

1. System (1) zur drehbaren Montage einer Abdeckplatte (2) für einen Kraftfahrzeugkofferraum an einer Verkleidung (3) dieses Raums, wobei das System zwei Einsteckvorrichtungen (4) zum Einstecken der drehbaren Platte umfasst, wobei jede der Vorrichtungen Folgendes umfasst:
• einen Querfinger (5), der dazu bestimmt ist, fest mit der Platte - beziehungsweise mit der Verkleidung - verbunden zu werden,
• eine Aufnahme (6) zum Einstecken des Fingers, die dazu bestimmt ist, fest mit der Verkleidung - beziehungsweise mit der Platte - verbunden zu werden, wobei die Aufnahme einen Sitz (7) zum Aufnehmen des Fingers in engem Kontakt aufweist, wobei der Sitz mit einer ersten Öffnung (8) versehen ist, die horizontal mündet, sodass die Platte durch horizontale Translation montiert wird,
wobei das System ferner die folgenden Merkmale aufweist:
• es umfasst ferner einen Hohlraum (9), der in der Verkleidung - beziehungsweise oder in der Platte - bereitgestellt ist, wobei die Aufnahme in dem Hohlraum montiert ist, wobei die erste Öffnung in eine zweite Öffnung (10) mündet, die in dem Hohlraum bereitgestellt ist, wobei der Hohlraum eine obere Wand (11), eine untere Wand (12) und eine mittlere Wand (13), die diese miteinander verbindet, aufweist, wobei das System **dadurch gekennzeichnet ist, dass** es ferner eine Entkopplungseinrichtung (14) aus elastisch komprimierbarem Material umfasst, das sich zwischen der Aufnahme und der oberen und der unteren Wand erstreckt, und dass zwischen der Aufnahme und der mittleren Wand ein Luftspalt (15) bereitgestellt ist.

2. System nach Anspruch 1, **dadurch gekennzeichnet, dass** sich die Entkopplungseinrichtung (14) ferner zwischen der Aufnahme (6) und der mittleren Wand (13) erstreckt, wobei sich der Luftspalt (15) zwischen der Einrichtung und der Wand befindet.

3. System nach einem der vorhergehenden Ansprüche, **dadurch gekennzeichnet, dass** die Entkopplungseinrichtung (14) auf einem elastomeren Material basiert.

4. System nach einem der vorhergehenden Ansprüche, **dadurch gekennzeichnet, dass** der Luftspalt (15) eine Mindeststärke von 0,5 mm aufweist.

5. System nach einem der vorhergehenden Ansprüche, **dadurch gekennzeichnet, dass**:
• die obere (11) und die untere (12) Wand in horizontalen Ebenen liegen, wobei die Aufnahme (6) eine obere (16) und eine untere (17) Außenfläche parallel zu der oberen und der unteren Wand aufweist, wobei die Entkopplungseinrichtung (14) oben und unten eine gleiche erste Stärke (18) aufweist,
• die mittlere Wand (13) in einer vertikalen Ebene liegt, wobei die Aufnahme ferner eine mittlere Außenfläche (19) parallel zu der mittleren Wand aufweist.

6. System nach Anspruch 5, wenn abhängig von Anspruch 2, **dadurch gekennzeichnet, dass** die Entkopplungseinrichtung (14) gegenüber der mittleren Wand (13) eine zweite Stärke (20) aufweist, die geringer ist als die erste Stärke (18).

7. System nach einem der vorhergehenden Ansprüche, **dadurch gekennzeichnet, dass** der Sitz (7) einen allgemein C-förmigen Querschnitt aufweist, dessen Öffnung auf elastische Weise vergrößerbar ist, um ein Einführen des Fingers (5) durch Kraftanwendung und sein Halten in dem Sitz zu ermöglichen, nachdem die Öffnung in ihren unverformten Zustand zurückgekehrt ist.

8. System nach einem der vorhergehenden Ansprüche, **dadurch gekennzeichnet, dass** die zweite Öffnung (10) oben und unten durch zwei Rücksprünge (21) begrenzt ist, die jeweils von der oberen (11) und der unteren (12) Wand ausgehen, wobei die Rücksprünge Anschläge zum Verhindern eines Herausziehens der Entkopplungseinrichtung (14) aus dem Hohlraum (9) bilden.

9. Anordnung, umfassend eine Verkleidung (3) und eine Platte (2), die darauf durch ein System nach einem der vorhergehenden Ansprüche montiert ist, wobei die Platte mit einem elektrodynamischen Wandler (22) versehen ist.

## Claims

1. System (1) for rotatably mounting a covering panel (2) for a motor vehicle trunk on a trim (3) of said compartment, said system comprising two devices (4) for rotatably slotting said panel, each of said devices comprising:
- a transverse finger (5) intended to be secured to said panel - respectively to said trim,
- a receiver (6) for said finger intended to be secured to said trim - respectively to said panel - said receiver having a recess (7) for receiving said finger in close contact, said recess being provided with a first opening (8) that is horizontally accessible so that said panel can be mounted by horizontal translation,
the system also having the following features:
- it further comprises a cavity (9) provided in said trim - or respectively in said panel -, said receiver being mounted in said cavity, said first opening leading into a second opening (10) provided in said cavity, said cavity having an upper wall (11), a lower wall (12) and a middle wall (13) connecting them, the system being **characterised in that** it further comprises a decoupling means (14) made of elastically compressible material extending between said receiver and said upper and lower walls, and **in that** an air gap (15) is provided between said receiver and said middle wall.

2. System according to claim 1, **characterized in that** the decoupling means (14) further extends between the receiver (6) and the middle wall (13), the air gap (15) being located between said means and said wall.

3. System according to one of the preceding claims, **characterized in that** the decoupling means (14) is based on elastomer material.

4. System according to any of the preceding claims, **characterized in that** the air gap (15) has a minimum thickness of 0.5 mm.

5. System according to any of the preceding claims, **characterized in that**:
- the upper (11) and lower (12) walls lie in horizontal planes, the receiver (6) having upper (16) and lower (17) external faces parallel to said upper and lower walls, the decoupling means (14) having a same first thickness (18) at the top and bottom,
- the middle wall (13) lies in a vertical plane, and the receiver (6) also has a middle outer face (19) parallel to said middle wall.

6. A system as claimed in claim 5, when related to claim 2, **characterized in that** the decoupling means (14) has a second thickness (20) opposite the middle wall (13) which is less than the first thickness (18).

7. A system according to any one of the preceding claims, **characterized in that** the recess (7) has a generally C-shaped cross-section, the opening of which is elastically enlargeable so as to enable the finger (5) to be forcibly inserted and held in said recess once said opening has returned to its undeformed state.

8. System according to any one of the preceding claims, **characterized in that** the second opening (10) is delimited at the top and bottom by two returns (21) coming respectively from the upper (11) and lower (12) walls, said returns forming anti-extraction stops for preventing the extraction of the decoupling means (14) from the cavity (9).

9. Assembly comprising a trim (3) and a panel (2) mounted thereon by a system according to any of the preceding claims, said panel being provided with an electrodynamic transducer (22).
